# EUROPÄISCHE PATENTSCHRIFT

(11) **EP 1 076 224 B1**
(45) Veröffentlichungstag und Bekanntmachung des Hinweises auf die Patenterteilung: **07.11.2007**
(21) Anmeldenummer: 00114740.4
(22) Anmeldetag: 08.07.2000
(51) Int. Cl.: G01D 5/14

(54) **Selbstadaptiver Sensor**
Autoadaptive sensor
Capteur autoadaptatif

(30) Priorität: 09.08.1999 DE 19936763
(43) Veröffentlichungstag der Anmeldung: 14.02.2001
(73) Patentinhaber: SIEMENS AKTIENGESELLSCHAFT, 80333 München (DE)
(72) Erfinder: Wallrafen, Werner, 65719 Hofheim (DE)

(56) Entgegenhaltungen:
- WO-A-98/37386
- DE-A1- 4 129 577
- PROCEEDINGS OF INTERNATIONAL SYMPOSIUM ON AUTOMOTIVE TECHNOLOGY AND AUTOMATION 16-19 JUNE 1997 FLORENCE, ITALY, Bd. 2, 16. Juni 1997 (1997-06-16), Seiten 1003-1011 vol., XP008048518 30th International Symposium on Automotive Technology and Automation. Mechatronics/Automotive Electronics. Real World Reasons to Use Unigraphics and Iman Automotive Autom Croydon, UK ISBN: 0-947719-87-3

## Beschreibung

Die Erfindung betrifft einen Sensor, insbesondere einen magnetisch empfindlichen Sensor, zur Impulszählung für die Messung von Drehzahlen und Winkelpositionen eines rotierenden Bauteils, welches mit einem mitrotierenden Impulsgeber, insbesondere einem magnetisch wirksamen Impulsrad, versehen ist, wobei der Sensor zur selbsttätigen Adaption seiner Schaltpunkte an die jeweiligen physikalischen Verhältnisse am Meßort ausgebildet ist.

Bei modernen Kraftfahrzeugen müssen Kurbelwellen- und Nockenwellendrehzahlen exakt bestimmt werden. Zur Verringerung des Kraftstoffverbrauchs und zu Diagnosezwecken muß ferner auch die Winkellage dieser Wellen schnell und exakt feststellbar sein. Zu diesem Zweck werden heutzutage oft magnetisch empfindliche Sensoren verwendet, welche feststehend in der unmittelbaren Nähe eines an der zu überwachenden Welle befestigten, sich mitdrehenden und aus ferroelektrischem Material gefertigten Zahnrads, magnetischen Polrads oder eines ähnlichen magnetisch wirksamen Impulsgebers (Impulsrad) angeordnet sind.

Derartige Sensoren enthalten bei Verwendung eines passiven Impulsrads (ferroelektrisches Zahnrad) zumeist einen Permanentmagneten zur Erzeugung eines Magnetfelds. Durch die vorbeirotierenden Zähne des Zahnrads wird das Magnetfeld des Permanentmagneten gestört. Ein derartiges ferromagnetisches Rad kann mit wellenförmiger oder scharf begrenzter Zahnstruktur am Umfang versehen oder als Lochblechring ausgebildet sein.

Bei Verwendung eines aktiven magnetischen Polrads wird ein sich mit der zu messenden Drehzahl drehendes, vielpoliges Magnetfeld erzeugt. Derartige Polräder können mit einem kunststoff-gebundenen mehrpoligen Ring, einem mehrpolig magnetisierten Ferromagnetring oder mit ringförmig angeordneten Einzelmagneten versehen sein.

Der feststehend montierte Sensor registriert den sich durch Drehung des Impulsgebers ändernden magnetischen Fluß und gibt bei Auftreten einer deutlichen Signalflanke des magnetischen Flusses einen Spannungsimpuls ab. Durch Abzählen der je Zeiteinheit auftretenden Impulse läßt sich die Drehzahl sehr exakt bestimmen. Mit einer im wesentlichen durch die Anzahl der Zähne am Zahnrad bzw. durch die Anzahl der Pole des Polrads festgelegten Auflösung kann auch die Winkelstellung der betreffenden Welle bestimmt werden.

Problematisch ist bei derartigen Sensoren insbesondere, daß die Signalstärke und die Steilheit der Signalflanken mit größer werdendem Abstand (Luftspalt) zwischen Sensor und Impulsgeber schnell abnimmt. Einbautoleranzen oder mechanische Schwingungen wirken sich auf diese Weise sehr stark aus.

Auch andere Einflußgrößen, wie Winkelversatz zwischen Sensor und Impulsgeber, Toleranzen in der Flußdichte des ungestörten Magnetfelds, Positionierung des Permanentmagneten, Temperatureinflüsse, etc., wirken sich auf die magnetischen Impulse aus, so daß gegebenenfalls ein ungenaues Zählergebnis oder Phasenverschiebungen die Folge sind.

Moderne magnetisch empfindliche Sensoren besitzen einen Korrekturmechanismus, wie er beispielsweise in Milano, Vig: "Self-Calibrating Hall Effect Gear Tooth Sensing Technology for Digital Powertrain Speed and Position Measurement", SENSOR 99 Proceedings I beschrieben ist und mit dessen Hilfe die Schaltpunkte, die zur Ableitung eines binären Ausgangssignals dienen, der Form der Flanken der auftretenden magnetischen Impulse dynamisch angeglichen werden können, so daß auch bei flacher werdenden Impulsflanken und schwächeren Impulsen noch eine richtige Zählung möglich ist.

Für hochgenaue und zeitkritische Anwendungen, wie der Bestimmung des Zündzeitpunktes eines Kraftfahrzeug-Motors, ist eine derartige dynamische Nachführung (Selbstadaption) der Schaltpunkte eines Drehzahlsensors allerdings zu träge, da der Nachführprozeß zu lange dauert. Ferner durchlaufen derartig ausgestattete Sensoren eine Startphase, während der sie ungenau arbeiten. Bei schnellen oder zyklischen Änderungen der oben genannten Einflußgrößen, wie sie in Kraftfahrzeugen regelmäßig durch Vibrationen oder mechanische Stöße hervorgerufen werden, oder wie sie durch exzentrischen Lauf des Impulsgebers entstehen, reagieren derartige Sensoren mit unkontrollierter Änderung ihrer Schaltpunkte, bedingt durch die dynamische Nachführung, was zu Genauigkeitseinbußen für die Phasenlage führt.

Aufgabe der vorliegenden Erfindung ist es, einen Sensor der eingangs genannten Art anzugeben, welcher unter Umgehung der oben angeführten Probleme eine sichere und genaue Drehzahl- und Drehwinkelmessung ermöglicht. Der Sensor soll ohne manuelle Feinjustierung am Anbauort auskommen.

Diese Aufgabe wird dadurch gelöst, daß der Sensor über eine Logik verfügt, welche die selbsttätige Adaption mit eingeschalteter Versorgungsspannung des Sensors von einem nicht an die physikalischen Verhältnisse am Meßort angepaßten Zustand einmalig aufgrund eines wenigstens ersten Überschreitens eines vorgegebenen Grenzwertes wenigstens eines vorgegebenen Betriebsparameters einleitet und welche die dabei ermittelte Konfiguration der Schaltpunkte in einem sensoreigenen nichtflüchtigen Datenspeicher zur ständigen Benutzung ablegt.

Dazu ist bei einer ersten Ausgestaltung der Erfindung vorgesehen, daß ein vorgegebener Betriebsparameter die Drehzahl des zu erfassenden rotierenden Bauteils ist und daß deren Grenzwert deutlich größer als Null ist.

Bei einer nächsten Ausgestaltung der Erfindung ist vorgesehen, daß ein vorgegebener Betriebsparameter eine Temperatur ist und daß deren Grenzwert deutlich über der Umgebungstemperatur liegt.

Um den Sensor an wechselnden Anbauorten benutzen zu können, und für Wartungszwecke ist bei einer ersten Weiterbildung der Erfindung vorgesehen, daß der nicht an die physikalischen Verhältnisse am Meßort angepaßte Zustand - im Folgenden auch Urzustand genannt - durch ein zugeführtes Kommando wieder herstellbar ist.

Dazu kann vorgesehen sein, daß die Herstellung des nicht an die physikalischen Verhältnisse am Meßort angepaßten Zustandes durch die Logik erfolgt, sobald ein Ausgang des Sensors gegen einen negativen oder positiven Pol der Versorgungsspannung des Sensors kurzgeschlossen wird (Kurzschlußüberwachung). Bei Wechsel des Anbauortes oder im Zuge von Wartungsarbeiten kann der Sensor damit einfach zurückgesetzt werden. Er justiert sich beim nächsten Anfahren wieder neu. Dabei ist es vorteilhaft, wenn die Versorgungsspannung außerhalb der Nenn-Betriebsspannung liegt.

Zur dauerhaften Speicherung einmal bestimmter Schaltpunkte kann vorgesehen sein, daß der nichtflüchtige Speicher ein elektrisch löschbarer Speicher, insbesondere ein EEPROM, ist. Zum Zurücksetzen des Sensors kann der Speicherinhalt auf an sich bekannte, einfache Weise gelöscht werden.

Zur Vermeidung von unerwünschten Temperatureinflüssen auf das Meßergebnis kann vorgesehen sein, daß der Sensor über eine ständig wirkende Temperaturkompensation der Schaltpunkte verfügt.

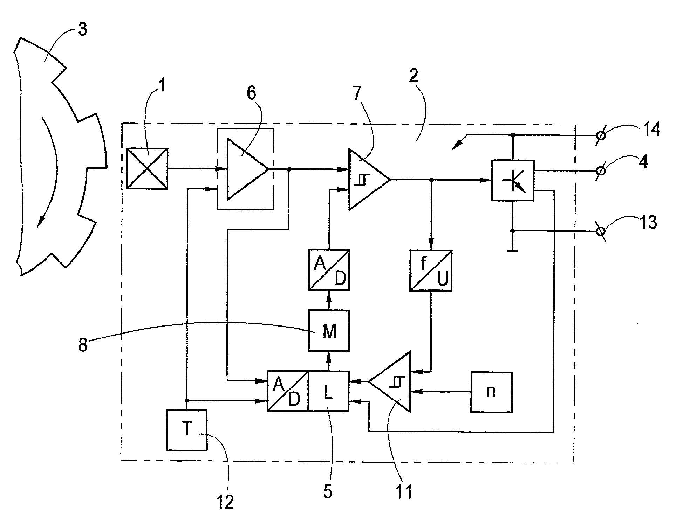

Die Erfindung läßt zahlreiche Ausführungsformen zu. Eine davon ist in der Zeichnung dargestellt und nachfolgend beschrieben. Die Zeichnung zeigt ein Blockschaltbild eines erfindungsgemäßen Sensors.

Die Zeichnung zeigt einen mit einem Hall-Element 1 versehenen erfindungsgemäßen Drehzahlsensor 2. Der Sensor 2 registriert die von einem aus ferromagnetischem Material bestehenden Impulsrad 3 erzeugten Störungen des Magnetfeldes eines im Hall-Element 1 eingebauten Permanentmagneten und liefert über einen Ausgang 4 ein entsprechendes binäres Spannungssignal.

Alternativ kann der Sensor 2 statt mit einem Hall-Element auch mit einem magnetoresistiven Widerstand versehen sein. Bei Verwendung eines magnetischen Polrades kann der Permanentmagnet im Hall-Element entfallen.

Der abgebildete Sensor 2 enthält zu Steuerungszwecken und für das automatische Einstellen der Schaltpunkte eine Logikschaltung 5 mit einem Analog/Digital-Wandler. Sie kann auch als Mikroprozessor ausgeführt werden.

Das von dem Hall-Element 1 kommende Signal wird über einen Verstärker 6 einem Komparator 7 zugeführt und dort mit den in einem sensoreigenen EEPROM-Speicher 8 abgelegten Schaltpunkten verglichen. Das daraus resultierende binäre Signal wird über eine Ausgangsstufe 9, die hier vereinfacht als Transistor dargestellt ist und eine Kurzschlußschutzschaltung enthält, dem Ausgang 4 zugeführt. Bei 14 erhält der Sensor Betriebsspannung, während Anschluß 13 mit Masse verbunden ist.

Erfindungsgemäß werden die Schaltpunkte des Sensors 2, sofern sich der Sensor im Urzustand befindet, das heißt, sofern eine derartige Bestimmung noch nicht stattgefunden hat, oder vorher zurückgesetzt wurde, durch die Logikschaltung 5 auf an sich bekannte Art und Weise einmalig neu bestimmt, falls die Frequenz des hinter dem Komparator 7 anliegenden Ausgangssignals einen im Sensor abgelegten Grenzwert n übersteigt. Dieser Grenzwert n liegt unterhalb der eigentlichen Betriebsdrehzahl des zu überwachenden Bauteils. Der Grenzwert n und das über einen Frequenz-Spannungswandler 10 abgegriffene Ausgangssignal werden zu diesem Zweck mit einem weiteren Komparator 11 verglichen. Das Ergebnis wird der Logikschaltung 5 zugeführt, die danach entscheidet, ob die Sensorschaltpunkte neu gesetzt werden müssen. Neu bestimmte Schaltpunkte werden von der Logikschaltung in dem EEPROM-Speicher 8 zur weiteren Benutzung abgelegt.

Durch diese Maßnahmen ist der Sensor 2 ohne manuelle Feinjustierung an jedem beliebigen passenden Anbauort nach kurzer Zeit einsetzbar, da die notwendige Justierung (das Einstellen der Schaltpunkte) vollautomatisch geschieht, sobald das betreffende Bauteil zum ersten Mal in Betrieb genomen wurde und dessen Drehzahl die Grenzdrehzahl n überschritten hat.

Zur Kompensation von Temperatureinflüssen ist bei diesem Ausführungsbeispiel ferner noch vorgesehen, daß das Meßsignal eines Temperatursensors 12 sowohl der Logikschaltung 5 als auch der Verstärkerschaltung 6 zur Berücksichtigung zuführbar ist. Ein weiteres Temperatursignal über die Betriebstemperatur in Anbaunähe des Sensors kann zur Auslösung des Abgleichvorgangs anstelle des Drehzahlsignals oder in Verbindung mit dem Drehzahlsignal herangezogen werden.

Zum Zurücksetzen eines bereits abgeglichenen Sensors 2 in den Urzustand, beispielsweise beim Wechsel des Anbauorts oder bei einer gegebenenfalls regelmäßigen manuellen oder vollautomatischen Wartung, ist bei dem Ausführungsbeispiel vorgesehen, den Ausgang mit der Versorgungsspannung bei 14 oder mit Masse bei 13 kurzzeitig zu verbinden. Dieser Kurzschluß wird von der Logikschaltung 5 registriert, welche daraufhin den EEPROM-Speicher 8 löscht und den Sensor dadurch in den Urzustand versetzt.

Zur Vermeidung ungewollter Rücksetzung in den Urzustand im Falle eines Kurzschlusses im Störungsfall kann als zweites Kriterium noch die Versorgungsspannung geprüft werden. Ein gezieltes Rücksetzen in den Urzustand soll nur dann ermöglicht werden, wenn gleichzeitig die Versorgungsspannung außerhalb der Nenn-Betriebsspannung liegt.

## Patentansprüche

1. Sensor, insbesondere magnetisch empfindlicher Sensor, zur Impulszählung für die Messung von Drehzahlen und Winkelpositionen eines rotierenden Bauteils, welches mit einem mitrotierenden Impulsgeber, insbesondere einem magnetisch wirksamen Impulsrad (3), versehen ist, wobei der Sensor zur selbsttätigen Adaption seiner Schaltpunkte an die jeweiligen physikalischen Verhältnisse am Meßort ausgebildet ist, **dadurch gekennzeichnet, daß** der Sensor über eine Logik (5) verfügt, welche die selbsttätige Adaption mit eingeschalteter Versorgungsspannung des Sensors (2) von einem nicht an die physikalischen Verhältnisse am Meßort angepaßten Zustand einmalig aufgrund eines wenigstens ersten Überschreitens eines vorgegebenen Grenzwertes wenigstens eines vorgegebenen Betriebsparameters einleitet und welche die dabei ermittelte Konfiguration der Schaltpunkte in einem sensoreigenen nichtflüchtigen Datenspeicher (8) zur ständigen Benutzung ablegt.

2. Sensor nach Anspruch 1, **dadurch gekennzeichnet, daß** ein vorgegebener Betriebsparameter die Drehzahl des zu erfassenden rotierenden Bauteils ist und daß deren Grenzwert deutlich größer als Null ist.

3. Sensor nach einem der vorhergehenden Ansprüche, **dadurch gekennzeichnet, daß** ein vorgegebener Betriebsparameter eine Temperatur ist und daß deren Grenzwert deutlich über der Umgebungstemperatur liegt.

4. Sensor nach einem der vorhergehenden Ansprüche, **dadurch gekennzeichnet, daß** der nicht an die physikalischen Verhältnisse am Meßort angepasste Zustand durch ein zugeführtes Kommando wieder herstellbar ist.

5. Sensor nach Anspruch 4, **dadurch gekennzeichnet, daß** die Herstellung des nicht an die physikalischen Verhältnisse am Meßort angepaßten Zustandes durch die Logik (5) erfolgt, sobald ein Ausgang des Sensors (13) gegen einen negativen oder positiven Pol (14) der Versorgungsspannung des Sensors kurzgeschlossen wird (Kurzschlußüberwachung).

6. Sensor nach Anspruch 5, **dadurch gekennzeichnet, daß** die Versorgungsspannung außerhalb der Nenn-Betriebsspannung liegt.

7. Sensor nach einem der vorhergehenden Ansprüche, **dadurch gekennzeichnet, daß** der nichtflüchtige Speicher ein elektrisch löschbarer Speicher, insbesondere ein EEPROM (8), ist.

8. Sensor nach einem der vorhergehenden Ansprüche, **dadurch gekennzeichnet, daß** der Sensor über eine ständig wirkende Temperaturkompensation der Schaltpunkte verfügt.

## Claims

1. Sensor, in particular magnetically sensitive sensor, for counting pulses for measuring rotational speeds and angular positions of a rotating component which is provided with a co-rotating pulse transmitter, in particular a magnetically acting pulse wheel (3), the sensor being designed for automatically adapting its switching points to the respective physical conditions at the measurement location, **characterized in that** the sensor has a logic unit (5) which initiates automatic adaptation, with the supply voltage of the sensor (2) turned on, of a state, which is not adapted to the physical conditions at the measurement location, once on the basis of a prescribed limit value of at least one prescribed operating parameter being exceeded for at least a first time, and which stores the configuration, determined in this process, of the switching points in a non-volatile data memory (8) specifically for the sensor, for constant use.

2. Sensor according to Claim 1, **characterized in that** a prescribed operating parameter is the rotational speed of the rotating component to be detected, and **in that** the limit value for said rotational speed is much greater than zero.

3. Sensor according to one of the preceding claims, **characterized in that** a prescribed operating parameter is a temperature, and **in that** the limit value for said temperature is significantly above the ambient temperature.

4. Sensor according to one of the preceding claims, **characterized in that** the state not adapted to the physical conditions at the measurement location can be restored by a supplied command.

5. Sensor according to Claim 4, **characterized in that** the state not adapted to the physical conditions at the measurement location is produced by the logic unit (5) as soon as an output of the sensor (13) is short-circuited to a negative or positive pole (14) of the sensor's supply voltage (short-circuit monitoring).

6. Sensor according to Claim 5, **characterized in that** the supply voltage is situated outside the nominal operating voltage.

7. Sensor according to one of the preceding claims, **characterized in that** the non-volatile memory is an electrically erasable memory, in particular an EEPROM (8).

8. Sensor according to one of the preceding claims, **characterized in that** the sensor has constantly active temperature compensation for the switching points.

## Revendications

1. Capteur, notamment capteur à sensibilité magnétique, destiné au comptage d'impulsions pour la mesure de vitesses de rotation et de positions angulaires d'un composant rotatif doté d'un générateur d'impulsions tournant avec le composant, notamment d'une roue à impulsions (3) agissant par effet magnétique, où le capteur est conçu pour une adaptation automatique de ses points de réaction aux conditions physiques respectives au lieu de mesure, **caractérisé par le fait que** le capteur dispose d'une logique (5) qui initie une seule fois, dès que la tension d'alimentation du capteur (2) est connectée, l'adaptation automatique d'un état non adapté aux conditions physiques au lieu de mesure en raison de au moins un premier dépassement d'une valeur limite donnée de au moins un paramètre de fonctionnement donné et qui stocke, pour pouvoir l'utiliser en permanence, la configuration ainsi déterminée des points de réaction dans une mémoire de données (8) non volatile propre au capteur.

2. Capteur selon la revendication 1, **caractérisé par le fait qu'**un paramètre de fonctionnement donné est la vitesse de rotation du composant rotatif à contrôler et que sa valeur limite est nettement supérieure à zéro.

3. Capteur selon l'une des revendications précédentes, **caractérisé par le fait qu'**un paramètre de fonctionnement donné est une température et que sa valeur limite est nettement supérieure à la température ambiante.

4. Capteur selon l'une des revendications précédentes, **caractérisé par le fait que** l'état non adapté aux conditions physiques au lieu de mesure peut être rétabli par une instruction qui lui est envoyée.

5. Capteur selon la revendication 4, **caractérisé par le fait que** la logique (5) procède au rétablissement de l'état non adapté aux conditions physiques au lieu de mesure, dès qu'une sortie du capteur (13) est court-circuitée (contrôle de court-circuit) contre un pôle négatif ou positif (14) de la tension d'alimentation du capteur.

6. Capteur selon la revendication 5, **caractérisé par le fait que** la tension d'alimentation est différente de la tension nominale de service.

7. Capteur selon l'une des revendications précédentes, **caractérisé par le fait que** la mémoire non volatile est une mémoire pouvant être effacée électriquement, notamment, qu'elle est un EEPROM (8).

8. Capteur selon l'une des revendications précédentes, **caractérisé par le fait que** le capteur dispose d'une compensation de température des points de réaction agissant en permanence.
